# EUROPEAN PATENT SPECIFICATION

(11) **EP 1 766 792 B1**
(45) Date of publication and mention of the grant of the patent: **05.01.2011**
(21) Application number: 05770252.4
(22) Date of filing: 07.07.2005
(51) Int. Cl.: H04L 12/58

(54) **A CELLULAR COMMUNICATION SYSTEM, A NETWORK ELEMENT AND A METHOD OF OPERATION THEREFOR**
EIN ZELLULÄRES KOMMUNIKATIONSSYSTEM, EIN NETZELEMENT UND EIN BETRIEBSVERFAHREN DAFÜR
SYSTEME DE COMMUNICATION CELLULAIRE, ELEMENT RESEAU ET LEUR MODE DE FONCTIONNEMENT

(30) Priority: 07.07.2004 GB 0415201
(43) Date of publication of application: 28.03.2007
(73) Proprietor: MOTOROLA, INC., Schaumburg, IL 60196 (US)
(72) Inventor: KILDEGAARD, Thomas C. Motorola A/S, DK-2600 Glostrup (DK); GONZALEZ ORTIZ, Natalia Guadalupe Motorola Limited, Basingstoke Hampshire RG22 4PD (GB); PETERSEN, Steen Motorola A/S, DK-2600 Glostrup (DK)
(74) Representative: McCormack, Derek James
(86) International application number: PCT/US2005/024331
(87) International publication number: WO 2006/010029

(56) References cited:
- US-A1- 2002 058 501
- US-A1- 2002 120 689
- US-A1- 2002 193 127
- US-A1- 2003 078 982
- US-A1- 2003 233 478
- US-B1- 6 411 800
- US-B2- 6 522 883

## Description

### Field of the invention

The invention relates to a cellular communication system, a network element and a method of operation therefor and in particular to communication of text strings in cellular communication systems.

### Background of the Invention

In a cellular communication system, a geographical region is divided into a number of cells each of which is served by a base station. The base stations are interconnected by a fixed network which can communicate data between the base stations. A remote unit is served via a radio communication link by the base station of the cell within which the remote unit is situated.

As a mobile remote unit moves, it may move from the coverage of one base station to the coverage of another, i.e. from one cell to another. As the remote unit moves towards a new base station, it enters a region of overlapping coverage of two base stations and within this overlap region it changes to be supported by the new base station. As the remote unit moves further into the new cell, it continues to be supported by the new base station. This is known as cell reselection or handover.

Communication from a remote unit to a base station is known as uplink, and communication from a base station to a remote unit is known as downlink.

The fixed network interconnecting the base stations is operable to route data between any two base stations, thereby enabling a remote unit in a cell to communicate with a mobile station in any other cell. In addition, the fixed network may comprise gateway functions for interconnecting to external networks such as the Public Switched Telephone Network (PSTN), thereby allowing remote units to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Examples of cellular communication systems include both public cellular communication system such as the Global System for Mobile communication (GSM) and Professional Mobile Radio (PMR) systems such as TETRA (TErrestrial Trunked RAdio).

Specifically, although TETRA may be used as a public cellular communication system, it is designed to provide a number of features and services which are particularly suitable for private organisations or groups such as for example the emergency services.

For example TETRA provides a number of features and services for managing and controlling group calls as well as for managing the membership of these groups. Thus, TETRA provides services for making group calls wherein e.g. a voice message is quickly and efficiently relayed to a specific group of remote units. TETRA furthermore provides features for managing the membership of different groups, priorities of different groups etc.

Other features and services provided by TETRA include a high level of security, push-to-talk channel allocation, broadcast calls etc.

TETRA is a Time Division Multiple Access (TDMA) system wherein 25 kHz wide channels are further divided into four time slots which may be individually assignable. Each time slot has a duration of 14.167 msecs and four timeslots are combined into a time frame having a duration of 56.67 msecs. Each of the four time slots in a time frame may be individually allocated to the same or different remote units. Furthermore, the time frames are combined into multi-frames comprising 18 time frames. Frame number 18 is reserved as a control frame wherein control information may be communicated during an active call.

TETRA provides for efficient communication of text messages to and from remote units. These text messages are typically displayed on a display of the remote unit and may support a dedicated text messaging service or may be part of another service. For example, TETRA provides for a service known as SDS (Short Data Service) which allows a user of one remote unit to transmit a short data message to a second remote unit. One application for SDS is transport of text messages sent from one remote unit or from fixed network equipment for displaying to the user of the second remote or fixed unit. Furthermore, TETRA provides for transmission of messages containing text in connection with formation of group calls. For example, during a DGNA (Dynamic Group Number Assignment) operation, the fixed network may transmit messages to the remote units indicating a group name text. This group name may then be displayed on the displays of the remote units joining the group.

Text is encoded in accordance with suitable encoding formats. Typically, text is encoded on a character by character basis in accordance with a suitable encoding rule. An example is the well known ASCII character sets wherein a data value is allocated to each of 127 text characters. Thus, a text character is encoded by selecting a seven bit ASCII value corresponding to that character. This provides a very simple encoding. Furthermore, since the ASCII character set has been widely used for decades, it allows compatibility between many different devices and services.

However, a disadvantage with ASCII encoding is that it is limited and inflexible. In particular, the restriction to 127 predefined characters significantly limits the text strings that can be created and prevents the inclusion of many text characters. Accordingly, more complex text encoding systems have been introduced which allow for much larger character sets.

An example of such an encoding scheme is UTF-8, which stands for UCS Transformation Format, 8-bit form. UTF-8 is defined in the ISO/IEC 10646:2003 standard, Information Technology - Universal Multiple-Octet Coded Character Set. In UTF-8 the length of the data representing a character is variable in number of bytes. A first byte of a UTF-8 data word comprises seven bits that indicate a character value and an eighth bit which indicates whether further bytes are included in the data word. Specifically, 127 different characters may be encoded in a single byte by setting the seven bits to reflect the predefined character value. However, other characters may also be encoded in accordance with UTF-8 by setting the eighth bit to indicate that the current data word comprises a further data byte. The second data byte likewise has a bit reserved to indicate if further data bytes are included in the data word. Thus, a two byte UTF-8 data word provides a total of fourteen bits for the character set thereby allowing for a huge increase of the text characters that can be encoded. Furthermore, as each byte comprises a bit indicating if further data bytes are included in the data word, UTF-8 provides for a potentially infinite character set.

Another example of an encoding scheme is UTF-16 which uses a variable length of two byte-words to represent characters and does not have a direct mapping to ASCII characters.

Communications systems such as TETRA have to use a suitable text encoding format for the transmission of text in messages sent to the remote units. Initially, TETRA systems employed an ASCII encoding format for generating text strings to be sent to the remote units in text messages and DGNA messages. Accordingly, both the fixed network and the remote units are conventionally arranged to transmit and receive text using ASCII character sets. However, as TETRA has been introduced to new areas and the demands and requirements have increased, the use of ASCII encoding has been found to be limiting. In particular, the ASCII character is not suitable for encoding of text using a large character set such as that of many Asian languages and the use of an ASCII character set has hindered the deployment of TETRA in Asian markets. Accordingly a more universal encoding scheme is preferred and for this reason the Technical Specifications for the TETRA communication system provide for the use of UTF-16 encoded text messages over the air interface.

However, in deployed communication systems using ASCII encoding, the introduction of UTF-16 or UTF-8 text encoding is problematic. Specifically, if the fixed network is upgraded before the remote units, the transmission of UTF-16 messages will result in the remote units not being able to decode the text strings and accordingly garbled text will be displayed. Similarly, if the fixed network does not to use the new text encoding format until all remote units have upgraded, this may result in a long delay before the advantages of the new text encoding format can be used by upgraded remote units. Accordingly, upgrading typically occurs by all remote units being upgraded in a complex and coordinated operation prior to the new text encoding format being used. This results in a very cumbersome upgrading process resulting in an increased downtime for the system as all remote units must be upgraded at the same time and simultaneously with the fixed network being upgraded.

Hence, an improved system for text communication in a cellular communication system would be advantageous and in particular a system allowing increased flexibility, improved character sets, improved text messaging, improved text services and/or facilitated upgrading or introduction of new text formats would be advantageous. In particular, a system allowing for improved performance for a gradual introduction of a new text encoding format would be advantageous.

The following references form part of the background prior art.

US2003/078982 describes generation of transmission data through a conversion process in which character string data attached to an e-mail is matched with a character set type that can be processed by a destination terminal apparatus.

US2002/120689 describes a method of transporting an electronic mail message which designates an addressee by a multi-lingual e-mail address associated with an encoding type. A receiver detects the encoding type and converts to an ASCII compatible address.

US-B1-6 411 800 describes a radio system for commercial broadcasters which has a sub-carner modulated for transmitting data on the main carrier frequency. The sub-carrier allows various data processing techniques to be employed.

US2002 058501 A1 describes a communication method in which a dictionary compression method is used to compress and decompress communicated messages.

US2002 193 127 A1 describes a method for preparing and transmitting SMS messages in a mobile radio network. A USSD handler of a mobile radio converts information in a USSD message into a SMS message for sending.

US2003 233 478 describes a method for compressing and decompressing data of a transmitted message by processing of text strings

US-B2-6 522 883 describes apparatus for use in a telecommunications delivery service to allow selection and delivery of a particular service using various routing protocols including a format conversion.

### Summary of the Invention

Accordingly, the Invention seeks to preferably mitigate, alleviate or eliminate one or more of the above mentioned disadvantages singly or in any combination.

According to a first aspect of the invention there is provided a network element for a cellular communication system, the network element comprising:
means for receiving for transmission a first text string encoded in a first encoding format;
conversion means for converting the first text string to a second text string at least partially encoded in a second encoding format by converting individual text characters from a character representation in accordance with the first encoding format to a character representation in accordance with the second encoding format; and
transmitter means for transmitting the text in a selected format to a remote unit;
and **characterised in that**:
the conversion means is operable to determine whether a current time instance is late by being after a specified date or after the end of a specified time duration; and, in response: (i) if the current time instance is determined not to be late to convert the received text to the second text string in accordance with the second encoding format and to provide the text in that format for transmission by the transmitter means; and (ii) if the current time is determined to be late to keep the text in the first encoding format and to provide the text in that format for transmission by the transmitter means.

The invention may allow improved text performance in a cellular communication system. In particular the invention may provide improved support for a plurality of text encoding formats and facilitate interaction of or the transition from one text encoding format to another. For example, during an upgrade of a cellular communication system comprising a transition from the second encoding format to the first encoding format, the fixed network may be upgraded to use the first encoding format while allowing for text strings to be transmitted to remote units using the second encoding format for some or all parts of some or all text strings. Thus a more flexible upgrade process may be used resulting in less inconvenience to users.

As an example, all parts of the first text string which may be encoded by the second encoding format may be converted thereby allowing all text which can be transmitted using the second encoding format to be transmitted in this format. Accordingly, if remote units are upgraded to support both the first and the second encoding format, all remote units will be capable of decoding this text. Text that cannot be encoded in accordance with the second encoding format may be encoded using the first encoding format thereby allowing improved text performance to upgraded remote units. Hence, a gradual transition may be achieved and specifically an operator of the fixed network may restrict himself to use text compatible with the second encoding format while encoding in the first encoding format, thereby allowing the upgraded equipment to be used in connection with non-upgraded remote units.

The means for transmitting is operable to support the transmission of the second text string to the remote unit but does not necessarily comprise the required radio functionality for transmitting over the air interface. For example, the means for transmitting may be a functional element of a network element of the fixed network which transmits the second text string to a base station which then transmits the second text string over the air interface. The first and/or second text string may comprise one or more text characters and preferably the first and second text string comprise the same number of text characters. The means for receiving may receive the first text string from an internal or external source. For example, the network element may comprise storage means for storing text strings and the means for receiving may receive the first text string by retrieving it from the storage means. As another example, the means for receiving may directly or indirectly receive the first text string from another network element or from a remote unit.

The invention provides for a particularly low complexity implementation which is particularly suitable for encoding formats wherein each text character is individually encoded without consideration of other characters of the text string. The feature may provide for a low complexity, reliable and accurate conversion to the second encoding format.

According to a preferred feature of the invention, the conversion means is operable to determine if a character of the first text string has a character representation in accordance with the second encoding format, and if so to include the character representation in accordance with the second encoding format in the second text string. This provides for a particularly low complexity, reliable and accurate conversion to the second encoding format. In particular it may facilitate a direct conversion resulting in the second text string comprising identical characters to the first text string when possible.

According to a preferred feature of the invention, the conversion means is operable determine if the character does not have a character representation in accordance with the second encoding format and if so to include a character representation of the character in accordance with the first encoding format in the second text string. This provides for increased text messaging. For example, text characters that can directly be converted are converted whereas text characters which e.g. are not comprised in the character set used by the second encoding format are not converted. Thus, remote units receive characters in accordance with the second encoding format if possible and otherwise in accordance with the first encoding format. Accordingly, remote units capable of only decoding the second encoding format (e.g. non-upgraded remote units) can decode all characters supported by the remote unit while further allowing remote units capable of decoding the first and second encoding formats (e.g. upgraded remote units) to decode all characters supported by the fixed network. This may in particular facilitate and/or improve performance during an upgrade of the text encoding format used in the cellular communication system.

According to a preferred feature of the invention, the conversion means is operable determine if the character does not have a character representation in accordance with the second encoding format and if so to include a character representation of the character in accordance with a third encoding format in the second text string. This may provide improved performance in some embodiments. For example, it may be advantageous in embodiments where remote units are capable of decoding text encoded according to the second or third encoding format but not in accordance with the first encoding format.

According to a preferred feature of the invention, the second encoding format comprises a subset of text characters of the first encoding format. For example, the second encoding format may provide for encoding of a latin character alphabet and the first encoding format may include this latin character alphabet but may in addition provide for encoding of a non-latin character alphabet. Hence, the invention may provide for increased compatibility between encoding formats and in particular may provide increased compatibility between standard and enhanced character sets. The invention may provide for improved performance during transition from a basic character set to an extended character set in a cellular communication system.

According to a preferred feature of the invention, the cellular communication system is a TETRA cellular communication system and the first text string is a text string of an Short Date Service (SDS) text message. The invention may provide improved performance for the SDS text service of a TETRA cellular communication system and may in particular allow improved compatibility in a system comprising remote units supporting different encoding formats. For example, the invention may enable or facilitate that a source remote unit supporting the first encoding format can successfully transmit a text message to a destination remote unit supporting the second encoding format but not the first encoding format.

According to a preferred feature of the invention, the cellular communication system is a TETRA cellular communication system and first text string is a text string of a DGNA (Dynamic Group Number Assignment) text message. The invention may provide improved performance for text messages transmitted in support of a DGNA process of a TETRA cellular communication system and may in particular allow improved compatibility in a system comprising remote units supporting different encoding formats.

According to a preferred feature of the invention, the remote unit is incapable of decoding text encoded in accordance with the first encoding format. The invention may provide for increased compatibility and support of remote units capable of only decoding a subset of the encoding systems employed by the cellular communication system. In particular, during a transition from the second encoding system to the first encoding system, the network element may provided for continued support of remote units which have not yet been upgraded to support the first encoding system.

Preferably the first encoding format is a UTF-8 or UTF-16 encoding format and the second encoding format is an ASCII encoding format. Hence, the invention may in particular facilitate a transition from an ASCII encoding format to a UTF-8 or 16 encoding format. Thus, the invention may specifically facilitate upgrading of a TETRA communication system from an ASCII based text messaging to a UTF encoding format in accordance with the Technical Specifications of TETRA. The ASCII encoding format may for example be the ISO/IEC 8859-1 Latin 1 8 bit encoding format standardised by the International Standards Organisation (ISO) in ISO/IEC 8859-1:1998 Information Technology - 8 bit single-byte coded graphic character sets - Part 1: Latin alphabet No. 1.

According to a preferred feature of the invention, the first encoding format is an encoding format supported by a subset of remote units supported by the network element and the second encoding format is an encoding format supported by all remote units supported by the network element. For example, the network element may be a base station and the second encoding format may be supported by all remote units in the cell whereas the first encoding format is only supported by some of the remote units (e.g. only those which have currently been upgraded). Hence, the invention may improve the compatibility between non-homogeneous remote unit capabilities.

Preferably the first encoding format is a text encoding format only supported by the cellular communication system following an upgrade to at least one element of a fixed network of the cellular communication system. Preferably the second encoding format is a text encoding format supported by the cellular communication system prior to the upgrade.

According to a preferred feature of the invention, the means for transmitting is further operable to transmit the first text string to a second remote unit. The invention may allow for differently encoded text strings being transmitted to different remote units thereby facilitating an optimisation of the encoding format used for the different remote units. The capability of the remote unit may be determined in response to messages received from the remote unit. For example, if a text message is received from a remote unit, it is determined which encoding format is used and this encoding format is subsequently used for transmissions to the remote unit.

According to a preferred feature of the invention, the conversion means are operable to convert the first text string to a third text string at least partially encoded in a third encoding format; and wherein the means for transmitting are further operable to transmit the third text string to a remote unit. The invention may allow for a flexible use of text encoding wherein a plurality of text encoding formats is supported.

Preferably the network element is a network element of a fixed network of a TERRA communication system.

Preferably the network element is a base station.

According to a second aspect of the invention, there is provided a cellular communication system comprising a network element in accordance with the first aspect.

According to a preferred feature of the invention, the cellular communication system further comprises: user interface means for receiving an input text string from a user and operable to generate the first text string by encoding the input text string in accordance with the first encoding format; and means for communicating the first text string from the user interface means to the network element. The invention may provide for a user, such as the operator of a cellular communication system, to input text strings using a user interface means which encodes the text strings in accordance with a different encoding format than the an encoding format supported by the remote unit. According to a third aspect of the invention, there is provided a method of operation for a cellular communication system, the method comprising the steps of:
receiving a first text string encoded in a first encoding format;
converting the first text string to a second text string at least partially encoded in a second encoding format by converting individual text characters from a character representation in accordance with the first encoding format to a character representation in accordance with the second encoding format; and
transmitting the text in a selected format to a remote unit; and characterised by:
determining whether a current time instance is late by being after a specified date or after the end of a specified time duration; and, in response: (i) if the current time instance is determined not to be late converting the received text to the second text string in accordance with the second encoding format and to provide the text in that format for transmission; and (ii) if the current time is determined to be late keeping the text in the first encoding format and providing the text in that format for transmission.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a TETRA cellular communication system in accordance with an embodiment of the invention.

### Detailed Description of a Preferred Embodiment of the Invention

The following description focuses on an embodiment of the invention applicable to text messaging in a TETRA cellular communication system. However, it will be appreciated that the invention is not limited to this application but may be applied to many other cellular communication systems including for example GSM or UMTS cellular communication systems.

FIG. 1 illustrates a TETRA cellular communication system 100 in accordance with a first embodiment of the invention. For clarity and brevity, only the elements of the communication system 100 required for describing the inventive concepts of the embodiment have been included and it will be appreciated that a practical cellular communication system typically will comprise substantial amounts of additional functionality.

In FIG. 1 a base station 101 supports a plurality of remote units 103, 105 of which two are shown. A remote unit may typically be a subscriber unit, a wireless user equipment, a mobile station, a communication terminal, a personal digital assistant, a laptop computer, an embedded communication processor or any communication element communicating over the air interface of the cellular communication system. The base station 101 is coupled to a fixed network 107 which interfaces to other base stations (not shown), to other communication networks (not shown) and provides operation and management functionality etc as is well known in the art.

In the described embodiment, the fixed network 107 is coupled to an operator terminal 109. The operator terminal 109 provides a user interface allowing an operator of the cellular communication system 100 to input various control and management messages. For example, the operator terminal 109 may be used by an operator to control the set-up, management and control of groups of remote units. Specifically, the operator terminal 109 may be used to instigate a DNGA group setup as will be well known to the person skilled in the art. As part of this operation, the operator may specifically input a text string which indicates the name of a group being formed. The text string may be forwarded through the fixed network 107 to the base station 101 from where it is embedded in suitable air interface text messages which are transmitted to the remote units 103, 105.

In a typical conventional TETRA communication system, text is encoded using an ASCII encoding format. For example, the ISO/IEC 8859-1 Latin 1 8 bit ASCII text encoding format has been specified in the TETRA Interoperability Profile (TIP) developed to allow interoperability between TETRA systems from different manufacturers. Accordingly, the ISO/IEC 8859-1 Latin 1 8 bit ASCII text encoding format is used in many TETRA communication systems. Thus, in conventional TETRA communication systems an operator terminal may encode a text string using the ISO/IEC 8859-1 Latin 1 8 bit ASCII alphabet and communicate this to the remote units through the appropriate base stations. The remote units are equipped to decode text in accordance with the ISO/IEC 8859-1 Latin 1 8 bit ASCII alphabet thereby resulting in the text inputted by the operator being correctly displayed on a display of the remote units.

However, the ISO/IEC 8859-1 Latin 1 8 bit ASCII alphabet is limited to 256 text characters of the Latin alphabet. This limitation causes a significant limitation in the possible text messages that may be communicated and in particular is unsuitable for Asian markets where a large number of Asian text characters should preferably be supported.

Thus, most TETRA compliant remote units currently only support a limited number of text encoding formats having a limited character set. In order to enhance the text functionality, it is desirable for a TETRA communication system to support a universal text encoding format that may be used to support a large (or possibly infinite) character set. Accordingly, such a text encoding format has been specified for use in TETRA cellular communication systems. Specifically, the TETRA Technical Specifications allow TETRA remote units to support the text encoding format known as UTF-16. However, in order to introduce a new text encoding format to a deployed TETRA cellular communication system, the network elements and the remote units must be updated to accommodate the new text encoding format.

It is clear that such an upgrade is critical and must be achieved with the minimum of inconvenience to users of the TETRA cellular communication system. The problem is exacerbated by the large number of fixed network elements and remote units that typically are employed in a system. Furthermore, upgrading normally requires that the remote units are physically upgraded, for example by a re-programming of semi-permanent memory such as PROMs (Programmable Read Only Memory). It is thus typically impractical to collectively upgrade all remote units in a single and quick operation.

Thus if elements of the fixed network equipment are upgraded to support additional text encoding formats before all remote units have been upgraded, the non-upgraded remote units cannot decode (all) text characters received and will as a result display garbled text. An option to overcome this may be to provide all remote units and all network elements with upgraded functionality for supporting the new text encoding format without activating the functionality at the time of upgrading. The remote units and network elements (such as an operator terminal) may thus continue to use the old text encoding formats after upgrading until all elements and remote units have been upgraded. At this time, a synchronised and coordinated activation of the upgraded functionality may be instigated resulting in the new text encoding format being simultaneously activated in all elements. However, such a coordinated and synchronised activation is extremely difficult, complex and unreliable to execute and will typically result in a significant downtime for the communication system.

Accordingly, the TETRA communication system of FIG. 1 comprises functionality allowing a gradual text encoding format upgrade to be performed with reduced inconvenience to the users of the communication system. In particular, the cellular communication system comprises means for converting text between a first encoding format and a second encoding format. The first encoding format may be an encoding format used after the upgrade and the second encoding format may be an encoding format used prior to the upgrade. The conversion may allow upgraded elements to generate text strings in the first encoding format while allowing this text to be at least partially encoded by remote units only supporting the second encoding format.

In the described embodiment, the text conversion functionality is comprised in the base station 101. The base station 101 comprises a receive processor 111 which is operable to receive a first text string encoded in a first encoding format. In the embodiment, the first text string is received from the operator terminal 109 through the fixed network 107.

The base station 101 further comprises a conversion processor 113 coupled to the receive processor 111 which passes the first string to the conversion processor 113. The conversion processor 113 is operable to convert the first text string to a second text string which is at least partially encoded in accordance with a second encoding format. The conversion processor 113 generates the second text string by converting the text from the first text encoding format to the second text encoding format in accordance with any suitable text algorithm. The second text string will thus be fully or partially encoded in accordance with the second text encoding format.

The conversion processor 113 is coupled to a transceiver 115 which receives the second text string from the conversion processor 113. The transceiver 115 is operable to transmit the second text string to the remote units 103, 105. In the specific embodiment, the transceiver 115 is operable to embed the second text string in a suitable air interface text message. The text message is then transmitted over the air interface by the transceiver 115 in accordance with the requirements of the TETRA Technical Specifications.

Accordingly, a remote unit which is capable of decoding the second text encoding format but not the first encoding format will, due to the text conversion performed by the conversion processor 113, be capable of decoding text generated by the operator terminal 109 using the first text encoding format. Thus, the text conversion allows elements of the communication system which use different and potentially incompatible text encoding formats to interwork.

As a specific example, in the communication system of FIG. 1, most deployed remote units 103, 105 may be arranged to support the ISO/IEC 8859-1 Latin 1 8 bit ASCII character set. Additionally, the fixed network 107 including the base stations 101 may also have been configured to use the same ASCII character set. However, in order to enhance the system to allow it to support a larger number of text characters, an upgrade to the text encoding format UTF-16 may be desired.

Prior to the upgrade, all text strings stored and generated by the network elements of the network are stored in the ASCII format. However, in order to facilitate the upgrade and achieve a gradual and convenient upgrade process, network elements of the network may be upgraded gradually and prior to the remote units. For example, the operator terminal 109 may be upgraded from using ASCII encoding to using UTF-16 encoding before any remote units 103, 105 are upgraded. The operator terminal 109 may proceed to generate text strings using the new UTF-16 encoding format. The text strings are communicated from the operator terminal 109 to the base station 101, where they are fed to the conversion processor 113.

The conversion processor 113 converts the UTF-16 encoded text string to a new text string at least partially encoded in accordance with the ASCII encoding format. The new text string is then transmitted to the remote units which may proceed to decode the text based on an assumption of the ASCII encoding format.

The remote units 103, 105 may then be upgraded as and when it is convenient. The upgraded remote units may still be capable of decoding the ASCII characters and therefore will display the correct text messages. Once the remote units 103, 105 have been upgraded, the conversion processor 113 may stop converting the text and the text messages may be sent using UTF-16 thereby allowing the system to take advantage of the enhanced text functionality provided.

Hence, the embodiment allows for elements of the communication system being upgraded without other elements necessarily being upgraded at the same time.

In the described embodiment, the first and second text strings are strings of individually encoded text characters. Furthermore, the second encoding format comprises a subset of text characters of the first encoding format. Thus the text characters supported by the second text encoding format preferably have a direct corresponding text character in accordance with the first text encoding format.

In the embodiment, the conversion processor 113 converts the first text string to the second text string by converting individual text characters from a character representation in accordance with the first encoding format to a character representation in accordance with the second encoding format.

Thus, specifically, the conversion processor 113 first reads the character representation of the first text character of the first text string. It then determines if the corresponding text character is comprised in the second text encoding format and if so the corresponding character representation in accordance with the second encoding format is included in the second text string. The conversion processor 113 preferably directly maps between character representations in accordance with the first text encoding format to character representations in accordance with the second text encoding format. In this case, the conversion processor 113 may in particular comprise a look-up table which has an entry for each possible data value in accordance with the first encoding format corresponding to the appropriate data value in accordance with the second encoding format.

For example, the text character "a" may in the first encoding format be represented by a data value of "01F0ₕ" (in hexadecimal notation) and in the second encoding format be represented by the data value of "1Aₕ". Thus, the entry for "01F0ₕ" in the look-up table will be "1Aₕ". The conversion processor 113 thus replaces the data value "01F0ₕ" of the first string with the data value "1Aₕ" in the second string.

In some embodiments, the data values of characters of the first encoding format may be identical to the data values for the same characters in accordance with the second encoding format. Thus, the second encoding format may effectively be a subset of the first encoding format. In such an embodiment, the conversion processor 113 may for example determine if the data value of the first text character in accordance with the first encoding format is within a given interval and if so may include the same data value in the second text string.

When the first character of the first string has been mapped to an appropriate character representation in accordance with the second encoding format, this is included in the second text string. The conversion processor 113 then proceeds to process the second text character of the first text string in the same way. Thus, in this embodiment, each text character is processed and converted individually and separately from other text characters thus resulting in a low complexity conversion process.

As the characters of the second encoding format form a subset of the characters of the first encoding format, it is possible that the conversion processor 113 receives text characters in the first string which cannot be represented in accordance with the second text encoding format. In this case the conversion processor 113 may include the original character representation in the second text string. Hence, the conversion processor 113 may determine if the character does not have a character representation in accordance with the second encoding format, and if so the character representation of the character in accordance with the first encoding format is included in the second text string. This will allow the characters comprised in the second encoding format to be correctly displayed on all upgraded and non-upgraded remote units 103, 105. Furthermore, the additional characters of the first encoding format may also be displayed correctly by the remote units which have been upgraded. Although, the additional characters of the first encoding format may not be displayed correctly by remote units that have not been upgraded, this will not be different than if no text conversion was performed.

In some embodiments, a different text encoding format may be used in at least some network elements of the fixed network and over the air interface. In such an embodiment, it may be advantageous to use the conversion processor 113 to also convert text into a third text encoding format which may be used over the air interface. Specifically, during the upgrade process, the conversion processor 113 may advantageously determine if a text character has a corresponding character representation in accordance with the second encoding format, and if so include this character representation. However, if no corresponding character representation exists, the conversion processor 113 includes a character representation of the character in accordance with the third encoding format.

As a specific example, UTF-16 has been specified for use over the air interface in TETRA communication systems. However, it is convenient to use UTF-8 in various network elements such as the operator terminal 109. In particular, UTF-8 provides a shorter representation of the text characters thereby facilitating storage and manipulation of text characters. Furthermore, UTF-8 is supported by operating systems such as UNIX thereby facilitating implementation of applications in network elements using this operating system.

Hence, an existing TETRA communication system using an ASCII text encoding format may be upgraded to use UTF-16 over the air interface and UTF-8 within the fixed network. Accordingly after upgrading, the text strings are converted from UTF-8 to UTF-16 before they are transmitted to the remote units. However, in the example, the conversion processor 113 converts the text characters from UTF-8 to ASCII whenever possible. Accordingly all remote units will be able to correctly decode these characters. However, if a character is received which cannot be encoded in ASCII, the conversion processor 113 converts the text character to the corresponding UTF-16 character representation thereby allowing upgraded remote units to correctly decode the text character.

An advantage of this approach is that there is a direct match between text characters of an ASCII alphabet, such as the ISO/IEC 8859-1 Latin 1 8 bit ASCII character set, and UTF-8 characters. Accordingly, as long as an operator has not entered new strings after upgrading, all UTF-8 strings will map directly to the ASCII character set. Thus, providing the operator only uses characters supported by the original ASCII character set, all remote units will correctly decode the text despite the operator terminal 109 being upgraded to use a different text encoding format. When all remote units have been upgraded to support UTF-16, the use of the new text encoding format may simply be activated by the operator now using the full character set rather than the limited character set of the original ASCII text encoding format. Hence, no correlated or synchronised switch-over is required.

In some embodiments, the text conversion is only required during a transitional period during which the cellular communication system is upgraded. It may be desirable for the base stations to perform a conversion during this upgrade followed by an automatic switch to the use of the new text encoding format. Hence, the base station may preferably automatically cease to perform the conversion at a suitable time without requiring user or operator intervention.

In such embodiments, the base station 101 may comprise means for making a time comparison. For example, the base station may determine if the conversion program has been active for longer than a certain duration. If this is the case, the base station 101 may simply cease to perform the conversion and thus allow text strings encoded in accordance with the first text encoding format to be transmitted to the remote units. This may for example allow a conversion program to be installed in one or more base stations 101 which is programmed to automatically terminate after, for example, one month. This will allow a month for the upgrade of all remote units from the time of upgrading the base station 101 while ensuring that the non-upgraded remote units can still decode received text. As another example, the base station 101 may check if a current date is after a specified date, and if so may cease to convert text prior to transmission to the remote units.

In the described embodiments, the conversion has been applied to all text strings. However, in some embodiments, the conversion may only be applied to text being transmitted to some remote units whereas the base station may transmit the first text string directly to other remote units. Thus, in such an embodiment, the base station will transmit text encoded in accordance with the second encoding format to some remote units and text encoded in accordance with the first encoding format to other remote units. For example, the base station may have information indicating which remote units have been upgraded and which have not been upgraded. Accordingly, it may use the first encoding format to transmit to the upgraded remote units and the second encoding format to transmit to non-upgraded remote units.

In such an embodiment, the base station may select the text encoding format dependent on the capability of the remote units. Any suitable method of determining the capability may be used. For example, the base station may evaluate text messages received from a remote unit to determine which text encoding format has been used and may then ensure that the same encoding format is used for text messages transmitted to the remote unit.

It will be appreciated that the above description has focussed on an embodiment wherein the conversion is performed in a base station. However, it will be appreciated that the conversion between text encoding formats may be performed at any suitable logical or physical location and by any suitable functional element. In particular, the text conversion may be performed in a network element of the fixed network other than a base station.

It will also be appreciated that although the above description is particularly suited for text communication as part of a DGNA (Dynamic Group Number Assignment) process wherein the text strings are generated by an operator, the invention is applicable to any text communication in a cellular communication system.

For example, in a TETRA system, the described principles may be applied to the Short Data Service (SDS) where text messages may be communicated between remote units. For example, a first remote unit may encode and decode text in accordance with a UTF-16 encoding format. This remote unit may transmit a message to a second remote unit which decodes text in accordance with an ASCII encoding format and which is not capable of decoding text in the UTF-16 encoding format. Accordingly, the base station serving the second remote unit may, when receiving a text message originating from the first remote unit, convert the text message from UTF-16 to ASCII. Accordingly, the text conversion may allow remote units using different encoding formats to communicate text messages to each other. Specifically, the first remote unit may be an upgraded remote unit and the second remote unit may be a non-upgraded remote unit.

It will be appreciated that the above description for clarity has described embodiments of the invention with reference to different functional units of the storage device. However, it will be apparent that any suitable distribution of functionality between different functional units may be used without detracting from the invention. Hence, references to specific functional units are only to be seen as references to suitable means for providing the described functionality rather than indicative of a strict logical or physical structure, organisation or separation.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A network element (101) for a cellular communication system (100), the network element comprising:
means (111) for receiving for transmission a first text string encoded in a first encoding format;
conversion means (113) for converting the first text string to a second text string at least partially encoded in a second encoding format by converting individual text characters from a character representation in accordance with the first encoding format to a character representation in accordance with the second encoding format; and
transmitter means (115) for transmitting the text in a selected format to a remote unit;
and **characterised in that**:
the conversion means (113) is operable to determine whether a current time instance is late by being after a specified date or after the end of a specified time duration; and, in response: (i) if the current time instance is determined not to be late to convert the received text to the second text string in accordance with the second encoding format and to provide the text **in that** format for transmission by the transmitter means; and (ii) if the current time is determined to be late to keep the text in the first encoding format and to provide the text **in that** format for transmission by the transmitter means.

2. A network element according to claim 1 wherein when the conversion means determines that the current time instance is late the conversion means is operable to cease to convert to the second encoding format.

3. A network element as claimed in claim 1 or claim 2, wherein the conversion means is operable to convert the first text string to the second text string by converting individual text characters from a character representation in accordance with the first encoding format to a character representation in accordance with the second encoding format; and the conversion means is operable to determine if a character of the first text string has a character representation in accordance with the second encoding format and if so to include the character representation in accordance with the second encoding format in the second text string, and if the character does not have a 20 character representation in accordance with the second encoding format, the conversion means is operable to include a character representation of the character in accordance with at least one of the first encoding format and a third encoding format in the second text string.

4. A network element according to any one of the preceding claims, wherein the cellular communication system is a TETRA (TErrestrial Trunked RAdio) cellular communication system and the first text string is a text string of one of an SDS (Short Data Service) text message and a DGNA (Dynamic Group Number Assignment) text message.

5. A network element according to any one of the preceding claims, wherein the first encoding format is one of a UTF-8 and a UTF-16 encoding format, and the second encoding format is an ASCII encoding format.

6. A network element according to any one of the preceding claims, wherein:
the first encoding format is an encoding format supported by a subset of remote units supported by the network element and the second encoding format is an 10 encoding format supported by all remote units supported by the network element; and the first encoding format is a text encoding format only supported by the cellular communication system following an upgrade to at least one element of a fixed network of the cellular communication system.

7. A network element according to any one of the preceding claims, wherein the conversion means is operable to convert the first text string to a third text string at least partially encoded in a third encoding format; and wherein the means for transmitting are further operable to transmit the third text string to a remote unit.

8. A network element according to any one of the preceding claims, wherein the network element is at least one of a network element of a fixed network of a TERRA (TErrestrial Trunked RAdio) communication system and a base station.

9. A cellular communication system comprising a network element in accordance with any one of the preceding claims.

10. A method of operation for a cellular communication system, the method comprising the steps of:
receiving a first text string encoded in a first encoding format;
converting the first text string to a second text string at least partially encoded in a second encoding format by converting individual text characters from a character representation in accordance with the first encoding format to a character representation in accordance with the second encoding format; and
transmitting the text in a selected format to a remote unit;
and **characterised by**:
determining whether a current time instance is late by being after a specified date or after the end of a specified time duration; and, in response: (i) if the current time instance is determined not to be late converting the received text to the second text string in accordance with the second encoding format and to provide the text in that format for transmission; and (ii) if the current time is determined to be late keeping the text in the first encoding format and providing the text in that format for transmission.

## Patentansprüche

1. Netzwerkelement (101) für ein zellulares Kommunikationssystem (100), umfassend:
Mittel (111) zum Empfangen zur Übermittlung eines in einem ersten Kodierungsformat kodierten Textelements;
Konvertierungsmittel (113) zum Konvertieren des ersten Textelementes in ein zweites Textelement, welches wenigstens teilweise in einem zweiten Kodierungsformat kodiert ist, durch Konvertieren einzelner Textzeichen von einer Zeichendarstellung in Übereinstimmung mit dem ersten Kodierungsformat in eine Zeichendarstellung in Übereinstimmung mit dem zweiten Kodierungsformat; und
Übertragungsmittel (115) zum Übertragen des Textes in einem gewählten Format an ein entferntes Gerät;
**dadurch gekennzeichnet,**
**dass** das Konvertierungsmittel (113) dazu geeignet ist zu bestimmen, ob ein aktueller Zeitpunkt gegenüber einem vorgegeben Datum verspätet ist oder nach dem Ende einer vorgegebenen Zeitdauer liegt; und als Reaktion (i) der empfangene Text in das zweite Textelement in Übereinstimmung mit dem zweiten Kodierungsformat konvertiert wird und der Text in diesem Format zur Übertragung durch die Übertragungsmittel bereitgestellt wird, wenn festgestellt wird, dass der aktuelle Zeitpunkt nicht verspätet ist; und (ii) der Text in dem ersten Kodierungsformat beibehalten wird und den Text in diesem Format zur Übertragung durch die Übertragungsmittel bereitzustellen, wenn festgestellt wird, dass der aktuelle Zeitpunkt verspätet ist.

2. Netzwerkelement gemäß Anspruch 1, wobei die Konvertierungsmittel dazu geeignet sind, das Konvertieren in das zweite Kodierungsformat zu beenden, wenn die Konvertierungsmittel feststellen, dass der aktuelle Zeitpunkt verspätet ist.

3. Netzwerkelement gemäß Anspruch 1 oder 2, wobei die Konvertierungsmittel dazu geeignet sind, durch Konvertieren einzelner Textzeichen von einer Zeichendarstellung in Übereinstimmung mit dem ersten Kodierungsformat zu einer Zeichendarstellung in Übereinstimmung mit dem zweiten Kodierungsformat das erste Textelement in das zweite Textelement zu konvertieren; und wobei das Konvertierungsmittel dazu geeignet ist zu bestimmen, ob ein Zeichen des ersten Textelementes eine Zeichendarstellung in Übereinstimmung mit dem zweiten Kodierungsformat hat und, wenn ja, die Zeichendarstellung in Übereinstimmung mit dem zweiten Kodierungsformat in das zweite Textelement aufzunehmen, und wobei das Konvertierungsmittel dazu geeignet ist, eine Zeichendarstellung des Zeichens in Übereinstimmung mit einem ersten Kodierungsformat und/oder einem dritten Kodierungsformat in das zweite Textelement aufzunehmen, wenn das Zeichen keine Zeichendarstellung in Übereinstimmung mit dem zweiten Kodierungsformat hat.

4. Netzwerkelement gemäß einem der vorhergehenden Ansprüche, wobei das zellulare Kommunikationssystem ein zellulares TETRA-Kommunikationssystem (TETRA = TErrestrial Trunked RAdio) ist und das erste Textelement ein Textelement von einer SDS-Textnachricht (SDS = Short Data Service) oder einer DGNA-Textnachricht (DGNA = Dynamic Group Number Assignment) ist.

5. Netzwerkelement gemäß einem der vorhergehenden Ansprüche, wobei das erste Kodierungsformat, ein UTF-8-Kodierungsformat oder ein UTF-16-Kodierungsformat ist und das zweite Kodierungsformat ein ASCII-Kodierungsformat ist.

6. Netzwerkelement gemäß einem der vorhergehenden Ansprüche, wobei:
das erste Kodierungsformat ein von einer Teilmenge der entfernten Geräte, die von dem Netzwerkelement unterstützt werden, unterstütztes Kodierungsformat ist und das zweite Kodierungsformat ein von allen entfernten Geräten, die von dem Netzwerkelement unterstützt werden, unterstütztes Kodierungsformat ist; und wobei das erste Kodierungsformat ein Kodierungsformat für Text ist, welches nur im Anschluss an ein Upgrade von wenigstens einem Element eines stationären Netzwerkes des zellularen Kommunikationssystems durch das zellulare Kommunikationssystem unterstützt wird.

7. Netzwerkelement gemäß einem der vorhergehenden Ansprüche, wobei das Konvertierungsmittel dazu geeignet ist, das erste Textelement in ein drittes Textelement zu konvertieren, welches wenigstens teilweise in einem dritten Kodierungsformat kodiert ist; und wobei die Mittel zum Übertragen weiterhin dazu geeignet sind, das dritte Textelement an ein entferntes Gerät zu übertragen.

8. Netzwerkelement gemäß einem der vorhergehenden Ansprüche, wobei das Netzwerkelement ein Netzwerkelement eines stationären Netzwerks eines TETRA-Kommunikationssystems (TETRA = TErrestrial Trunked RAdio) und/oder eine Basisstation ist.

9. Zellulares Kommunikationssystem mit einem Netzwerkelement gemäß einem der vorhergehenden Ansprüche.

10. Verfahren zum Betreiben eines zellularen Kommunikationssystems, umfassend die Schritte:
Empfangen eines ersten Textelementes, das in einem ersten Kodierungsformat kodiert ist;
Konvertieren des ersten Textelementes in ein zweites Textelement, das wenigstens teilweise in einem zweiten Kodierungsformat kodiert ist, durch Konvertieren einzelner Textzeichen von einer Zeichendarstellung in Übereinstimmung mit dem ersten Kodierungsformat in eine Zeichendarstellung in Übereinstimmung mit dem zweiten Kodierungsformat; und
Übertragen des Textes in einem gewählten Format an ein entferntes Gerät;
**dadurch gekennzeichnet:**
Bestimmen, ob ein aktueller Zeitpunkt gegenüber einem vorgegebenen Datum verspätet ist oder nach dem Ende einer vorgegebenen Zeitdauer liegt; und als Reaktion: (i) Konvertieren des empfangenen Textes in das zweite Textelement in Übereinstimmung mit dem zweiten Kodierungsformat und Bereitstellen des Textes in diesem Format zur Übertragung, wenn festgestellt wird, dass der aktuelle Zeitpunkt nicht verspätet ist; und (ii) Beibehalten des Textes in dem ersten Kodierungsformat und Bereitstellen des Textes in diesem Format zur Übertragung, wenn festgestellt wird, dass der aktuelle Zeitpunkt verspätet ist.

## Revendications

1. Elément de réseau (101) pour un système de communication cellulaire (100), l'élément de réseau comprenant :
des moyens (111) pour recevoir, en vue d'une transmission, une première chaîne de texte codée dans un premier format de codage ;
des moyens de conversion (113) pour convertir la première chaîne de texte en une deuxième chaîne de texte au moins partiellement codée dans un deuxième format de codage, par conversion de caractères de texte individuels d'une représentation de caractère selon le premier format de codage en une représentation de caractère selon le deuxième format de codage ; et
des moyens de transmission (115) pour transmettre le texte à une unité distante dans un format sélectionné ;
et **caractérisé en ce que** :
les moyens de conversion (113) ont pour fonction de déterminer si une instance temporelle courante est en retard du fait qu'elle se situe après une date spécifiée ou après la fin d'une durée spécifiée ; et, en réponse : (i) si l'instance temporelle courante est déterminée comme n'étant pas en retard, de convertir le texte reçu en la deuxième chaîne de texte selon le deuxième format de codage et d'envoyer le texte dans ce format pour sa transmission par les moyens de transmission ; et (ii) si l'instant courant est déterminé comme étant en retard, de conserver le texte au premier format de codage et d'envoyer le texte dans ce format pour sa transmission par les moyens de transmission.

2. Elément de réseau selon la revendication 1, dans lequel, lorsque les moyens de conversion déterminent que l'instance temporelle courante est en retard, les moyens de conversion ont pour fonction de cesser de convertir au deuxième format de codage.

3. Elément de réseau selon la revendication 1 ou la revendication 2, dans lequel les moyens de conversion ont pour fonction de convertir la première chaîne de texte en la deuxième chaîne de texte par conversion de caractères de texte individuels d'une représentation de caractère selon le premier format de codage en une représentation de caractère selon le deuxième format de codage ; et les moyens de conversion ont pour fonction de déterminer si un caractère de la première chaîne de texte a une représentation de caractère selon le deuxième format de codage et, si tel est le cas, d'inclure la représentation de caractère selon le deuxième format de codage dans la deuxième chaîne de texte, et, si le caractère n'a pas une représentation de caractère selon le deuxième format de codage, les moyens de conversion ont pour fonction d'inclure une représentation de caractère du caractère selon au moins l'un du premier format de codage et d'un troisième format de codage dans la deuxième chaîne de texte.

4. Elément de réseau selon l'une quelconque des revendications précédentes, dans lequel le système de communication cellulaire est un système de communication cellulaire du type TETRA ("TErrestrial Trunked Radio"), et la première chaîne de texte est une chaîne de texte d'un message de texte SDS ("Short Data Service") ou bien d'un message de texte DGNA ("Dynamic Group Number Assignment").

5. Elément de réseau selon l'une quelconque des revendications précédentes, dans lequel le premier format de codage est un format de codage UTF-8 ou bien un format de codage UTF-16, et le deuxième format de codage est un format de codage ASCII.

6. Elément de réseau selon l'une quelconque des revendications précédentes, dans lequel :
le premier format de codage est un format de codage pris en charge par un sous-ensemble d'unités distantes prises en charge par l'élément de réseau et le deuxième format de codage est un format de codage pris en charge par toutes les unités distantes prises en charge par l'élément de réseau ; et le premier format de codage est un format de codage de texte pris en charge uniquement par le système de communication cellulaire après une mise à niveau vers au moins un élément d'un réseau fixe du système de communication cellulaire.

7. Elément de réseau selon l'une quelconque des revendications précédentes,
dans lequel les moyens de conversion ont pour fonction de convertir la première chaîne de texte en une troisième chaîne de texte au moins partiellement codée dans un troisième format de codage ; et
dans lequel les moyens de transmission ont en outre pour fonction de transmettre la troisième chaîne de texte à une unité distante.

8. Elément de réseau selon l'une quelconque des revendications précédentes,
dans lequel l'élément de réseau est un élément de réseau d'un réseau fixe d'un système de communication de type TETRA ("TErrestrial Trunked Radio") et/ou une station de base.

9. Système de communication cellulaire comprenant un élément de réseau selon l'une quelconque des revendications précédentes.

10. Procédé de fonctionnement d'un système de communication cellulaire, le procédé comprenant les étapes consistant à :
recevoir une première chaîne de texte codée dans un premier format de codage ;
convertir la première chaîne de texte en une deuxième chaîne de texte au moins partiellement codée dans un deuxième format de codage, par conversion de caractères de texte individuels d'une représentation de caractère selon le premier format de codage en une représentation de caractère selon le deuxième format de codage ; et
transmettre le texte à une unité distante dans un format sélectionné ;
et **caractérisé par** l'étape consistant à :
déterminer si une instance temporelle courante est en retard du fait qu'elle se situe après une date spécifiée ou après la fin d'une durée spécifiée ; et, en réponse : (i) si l'instance temporelle courante est déterminée comme n'étant pas en retard, convertir le texte reçu en la deuxième chaîne de texte selon le deuxième format de codage et envoyer le texte dans ce format pour sa transmission ; et (ii) si l'instant courant est déterminé comme étant en retard, conserver le texte au premier format de codage et envoyer le texte dans ce format pour sa transmission.
